# EUROPÄISCHE PATENTANMELDUNG

(11) **EP 2 412 508 A1**
(43) Veröffentlichungstag der Anmeldung: **01.02.2012**
(21) Anmeldenummer: 10171295.8
(22) Anmeldetag: 29.07.2010
(51) Int. Cl.: B29C 47/02, B29C 47/82, B29C 47/92

(54) **Verfahren zur Beschichtung von Oberflächen mit einem thermoplastischen Elastomer auf Polyurethanbasis und hergestellter Artikel**

(71) Anmelder: Innovent e.V., 07745 Jena (DE)
(72) Erfinder: Dautz, Sylvana, Dr., 07747 Jena (DE); Hesse, Julia, 07743 Jena (DE)
(74) Vertreter: Patentanwälte Bressel und Partner

(57) **Zusammenfassung**

Die Erfindung betrifft ein Verfahren zur Beschichtung der Oberfläche (2) eines Artikels (1) mit einem thermoplastischen Elastomer auf Polyurethanbasis durch Direktextrusion, bei dem
• ein Artikel (1) an der Düse (9) eines Extruders (6) vorbeigeführt wird,
• aus der Düse (9) des Extruders (6) ein im Extruder auf eine Temperatur von 190°C bis 250°C erhitztes geschmolzenes thermoplastisches Elastomer auf Polyurethanbasis (7) auf die Oberfläche (2) des Artikels (1) aufgebracht wird, wobei auf der Oberfläche ein Beschichtungsfilm (13) aus thermoplastischem Elastomer auf Polyurethanbasis gebildet wird, und

der Beschichtungsfilm abgekühlt wird, wobei eine feste Oberflächenschicht (14) aus dem Elastomer gebildet wird,
einen Artikel, dessen Oberfläche mit einem thermoplastischen Elastomer auf Polyurethanbasis beschichtet ist, und die Verwendung einer Folie aus einem thermoplastischen Elastomer auf Polyurethanbasis als Beschichtungsmaterial.

## Beschreibung

Die vorliegende Erfindung betrifft ein Verfahren zur Beschichtung der Oberfläche eines Artikels mit einem thermoplastischen Elastomer auf Polyurethanbasis, einen Artikel, dessen Oberfläche mit einem thermoplastischen Elastomer auf Polyurethanbasis beschichtet ist und die Verwendung einer Folie aus thermoplastischen Elastomer auf Polyurethanbasis als Beschichtungsmaterial.

Oberflächen werden zum Schutz oder zur optischen Aufwertung oftmals lackiert. Diverse Lacksysteme beruhen im Allgemeinen auf duroplastischen Polymeren. Sie besitzen in der Regel eine gute chemische Beständigkeit. Allerdings sind duroplastische Polymere hart und oft auch spröde, was eine nachträgliche Verformung des Substrates nur sehr eingeschränkt ermöglicht, da der Lack sonst reißen würde. Hinzu kommt das Problem der Verwendung von Lösemitteln.

In Anbetracht des Standes der Technik besteht eine Aufgabe der Erfindung in der Bereitstellung einer Beschichtung bzw. eines Beschichtungsmaterials, die/das im Gegensatz zu kommerziellen Lacken flexibel ist und durch Verformung nicht zerstört wird.

Eine weitere Aufgabe ist die Bereitstellung einer lösemittelfreien Beschichtung bzw. eines lösungsmittelfreien Beschichtungsmaterials, die/das chemisch beständig ist.

Noch eine Aufgabe der vorliegenden Erfindung besteht in der Bereitstellung von Verfahren zur Herstellung eines Beschichtungsmaterials und von Beschichtungen mit den oben genannten Eigenschaften.

Die genannten Aufgaben werden durch die in den Patentansprüchen genannten Verfahren und Produkte gelöst, betreffend ein Verfahren zur Beschichtung der Oberfläche eines Artikels mit einem thermoplastischen Elastomer auf Polyurethanbasis, einen Artikel, dessen Oberfläche mit einem thermoplastischen Elastomer auf Polyurethanbasis beschichtet ist und die Verwendung einer Folie aus thermoplastischen Elastomer auf Polyurethanbasis als Beschichtungsmaterial.

Eine Beschichtung aus einem thermoplastischen Elastomer auf Polyurethanbasis hat sich aufgrund folgender Eigenschaften als vorteilhaft erwiesen:
- UV-Beständigkeit
- Glätte
- Abriebfestigkeit
- Schlagzähigkeit
- Elastizität, Dehnbarkeit
- Knick/Biegefestigkeit, d.h. Verformbarkeit des Substrates ohne Beschädigung der Beschichtung
- Ein- und Weiterreißfestigkeit
- geringe bleibende Verformung nach Langzeitbelastung
- chemische und physikalische Beständigkeit, z.B. gegen Öle, Fette, Kohlenwasserstoffe, Sauerstoff, Ozon
- Resistenz gegen Hydrolyse und Mikroorganismen.

Nicht alle oben genannten Vorteile müssen in jeder Ausführungsform der Erfindung gleichzeitig verwirklicht sein.

Beispielhafte und besonders geeignete Artikel, die mit einer Beschichtung aus einem thermoplastischen Elastomer auf Polyurethanbasis versehen werden können, sind ausgewählt aus Blechen, Behältern, Leisten, Profilen, Möbeln, Verpackungen, technischen Geräten, Haushaltsgeräten, Unterhaltungselektronikartikeln, medizinischen Geräten, Laborgeräten.

Beispielhafte und besonders geeignete Oberflächenmaterialien, die mit einer Beschichtung aus einem thermoplastischen Elastomer auf Polyurethanbasis versehen werden können, sind ausgewählt aus Kunststoffen, wie Polyolefinen, Polycarbonaten, Polyestern, Polyoxymethylenen, Holz, Keramik, Glas, Metallen und Metalllegierungen, wie zum Beispiel Eisen, Stahl, Zink, Messing, Kupfer, Aluminium, Aluminiumlegierungen, insbesondere Legierungen umfassend Aluminium, Magnesium und/oder Silizium.

Die Geometrie der zu beschichtenden bzw. der beschichtenden Oberfläche ist nicht besonders beschränkt. So können gerade, gekrümmte, glatte oder nicht-glatte Oberflächen beschichtet werden. Besonders bevorzugt sind gerade glatte Oberflächen.

Ein Gegenstand der Erfindung ist ein Verfahren zur Beschichtung der Oberfläche eines Artikels mit einem thermoplastischen Elastomer auf Polyurethanbasis durch Direktextrusion, bei dem
- ein Artikel an der Düse eines Extruders vorbeigeführt wird,
- aus der Düse des Extruders ein im Extruder auf eine Temperatur von 190°C bis 250°C erhitztes geschmolzenes thermoplastisches Elastomer auf Polyurethanbasis auf die Oberfläche des Artikels aufgebracht wird, wobei auf der Oberfläche ein Beschichtungsfilm aus thermoplastischem Elastomer auf Polyurethanbasis gebildet wird, und
- der Beschichtungsfilm abgekühlt wird, wobei eine feste Oberflächenschicht aus dem Elastomer gebildet wird.

Thermoplastische Elastomere auf Polyurethanbasis sind nicht leicht zu verarbeiten. Es handelt sich um Polymere, die sowohl chemische als auch physikalische Vernetzungen aufweisen können. Sie weisen einen engen Schmelzbereich auf. Es hat sich bei der Erfindung gezeigt, dass TPU im gerade geschmolzenen Zustand eine relativ hohe Viskosität aufweisen, was die Verarbeitung zu dünnen Schichten erschwert. Andererseits hat sich in der Erfindung gezeigt, dass thermoplastische Elastomere auf Polyurethanbasis bei der Direktextrusion temperaturempfindlich sind, so dass bei Wahl von hohen Temperaturen eine thermische Schädigung des Materials auftreten kann.

Mit den erfindungsgemäßen Verfahren lassen sich sehr dünne und qualitativ sehr hochwertige Schichten aus thermoplastischem Elastomer auf Polyurethanbasis auf die Oberfläche eines Artikels aufbringen. Das thermoplastische Elastomer auf Polyurethanbasis wird im Extruder auf eine relativ hohe Temperatur von 190°C bis 250°C erhitzt und mit dieser Temperatur auf die Oberfläche des Artikels aufgebracht. Es hat sich überraschenderweise gezeigt, dass bei der oben genannten Temperatur eine höhere Haftfestigkeit der Beschichtung erzielt werden kann. Zudem können durch die geringe Viskosität der Schmelze bei dieser Temperatur auf der Oberfläche des Artikels sehr dünne und gleichmäßige Beschichtungen erzeugt werden. Die Verarbeitungstemperatur eines thermoplastischen Elastomers auf Polyurethanbasis ist im erfindungsgemäßen Verfahren in der Regel höher als die übliche oder empfohlene Verarbeitungstemperatur, um diese Effekte zu erzielen.

Ein weiterer Vorteil des erfindungsgemäßen Verfahrens liegt darin begründet, dass als Ausgangsstoff ein Kunststoffgranulat eingesetzt werden kann. Thermoplastische Elastomere auf Polyurethanbasis werden bislang eher in Form von Sinterpulvern eingesetzt, die aufgrund ihrer feinteiligen Beschaffenheit schwerer zu handhaben und zu verarbeiten sind als grobkörnigere Granulate.

Der Begriff "Direktextrusion" bezeichnet das Aufbringen von geschmolzenem Kunststoff aus einem Extruder unmittelbar, d.h. direkt, auf die zu beschichtende Oberfläche.

Zur Beschichtung wird bei der Direktextrusion ein Artikel mit der zu beschichtenden Oberfläche vorzugsweise mit einer Vorschubeinrichtung bewegt. Die Vorschubeinrichtung leitet den Artikel mit einer bestimmten Geschwindigkeit an der Düse vorbei, wobei die zu beschichtende Oberfläche zur Düse hin orientiert ist. Außerdem kann mit der Vorschubeinrichtung auch ein Anpressdruck auf die zu beschichtende Oberfläche des Artikels ausgeübt werden, z.B. mittels Transportwalzen, die an dem Artikel anliegen und Druck ausüben. Ein beispielhafter Anpressdruck liegt im Bereich von 2 bis 8 bar, insbesondere 4 bis 6 bar.

Im vorliegenden Verfahren wird thermoplastisches Elastomer auf Polyurethanbasis (TPU) oder eine Mischung aus verschiedenen TPU, gegebenenfalls unter Zusatz von Additiven, in den Extruder gegeben. Das oder die TPU werden vorzugsweise als Granulat eingesetzt. Danach wird im beheizten Extruder, genauer im Extruderzylinder, bei 190°C bis 250°C eine Schmelze des TPU erzeugt. Die Schmelze wird vom Zylinder des Extruders zur Düse des Extruders geleitet. Durch die Düse wird das geschmolzene thermoplastische Elastomer auf Polyurethanbasis unmittelbar auf die Oberfläche des Artikels aufgebracht.

Verschiedenste Düsengeometrien der Extruderdüse sind verwendbar, wobei die Geometrie vorzugsweise an die Geometrie der zu beschichtenden Oberfläche angepasst wird. In einer bevorzugten Ausführungsform ist der Extruder mit einer Schlitzdüse versehen. Eine Schlitzdüse besitzt eine schlitzförmige Düsenaustrittsöffnung. Der Begriff Schlitzdüse bezeichnet eine Düse mit einer Öffnung, deren Verhältnis von Schlitzlänge zu Schlitzbreite > 1:1, vorzugsweise ≥ 10:1, noch mehr bevorzugt ≥ 50:1 ist. Besonders bevorzugt liegt das Verhältnis von Schlitzlänge zu Schlitzbreite im Bereich von 10:1 bis 500:1. Der Schlitz kann gerade oder entlang der Längsachse gebogen sein. Ein gebogener Schlitz bietet sich für die Beschichtung einer entsprechend gebogenen Oberfläche an. Ist der Schlitz gerade, so hat er vorzugsweise eine rechteckige Form. Vorzugsweise weist die Düse eine Schlitzlänge auf, die größer ist als die Breite der zu beschichtenden Oberfläche, wobei die Breite der zu beschichtenden Oberfläche die Ausdehnung der Oberfläche senkrecht zur Bewegungsrichtung des Artikels ist.

In einer speziellen Ausführungsform kann die Düse Teil eines Extruderwerkzeuges sein, das zusätzlich zur Düse auch eine Werkzeugplatte aufweist. Die Werkzeugplatte besitzt eine Oberfläche mit zweidimensionaler Ausdehnung auf der Austrittsseite der Kunststoffschmelze. In die Oberfläche der Werkzeugplatte ist die Düsenöffnung, vorzugsweise eine schlitzförmige Düsenaustrittsöffnung, eingelassen. Durch die Werkzeugplatte verläuft der Kanal der Düse vom Extruderzylinder bis zur Oberfläche der Werkzeugplatte. Der Düsenkanal kann in seinen Dimensionen variieren. In einer speziellen Variante kann sich der Düsenkanal vom Extruderzylinder in Richtung der Düsenaustrittsöffnung verbreitern. Dadurch wird die Fläche des Kunststoffauftrags auf die Oberfläche des Artikels vergrößert und die Kunststoffschmelze bei Auftrag auf die Oberfläche breiter verteilt.

Wie erwähnt, besitzt die Werkzeugplatte, wenn in der speziellen Ausführungsform vorhanden, eine Oberfläche mit zweidimensionaler Ausdehnung. Bei Durchführung des Verfahrens wird der zu beschichtende Artikel an dem Werkzeug vorbeigeführt. Zwischen der Oberfläche der Werkzeugplatte und der zu beschichtenden Oberfläche des Artikels wird dabei ein Zwischenraum bzw. ein Spalt mit definierter Breite gebildet, in dem die Kunststoffschmelze nach Austritt aus der Düsenaustrittsöffnung verteilt wird. Im Zwischenraum kann die Kunststoffschmelze sehr gleichmäßig auf der zu beschichtenden Oberfläche verteilt werden.

In noch einer speziellen Ausführungsform weist das Extruderwerkzeug einen Staubalken auf, der den Spalt zwischen der Oberfläche der Werkzeugplatte und der zu beschichtenden Oberfläche des Artikels verengt. Der Staubalken ist in Bewegungsrichtung des zu beschichtenden Artikels hinter der Düse bzw. hinter der Düsenaustrittsöffnung angebracht, aber nicht zwingend unmittelbar hinter der Düsenaustrittsöffnung. Der Staubalken beeinflusst die Schichtdicke des erhaltenen TPU-Films, da er den Spalt zwischen der Oberfläche der Werkzeugplatte und der zu beschichtenden Oberfläche des Artikels verengt. Außerdem wird durch den Staubalken die TPU-Schmelze, die sich im Zwischenraum zwischen der Oberfläche der Werkzeugplatte und der zu beschichtenden Oberfläche des Artikels befindet, komprimiert und der Druck der Schmelze auf die zu beschichtende Oberfläche erhöht. Durch den Staubalken wird ebenfalls die Schichtdicke beeinflusst. Zudem kann durch den Staubalken die Haftfestigkeit der Schicht erhöht werden.

Beim Aufbringen des geschmolzenen thermoplastischen Elastomers auf Polyurethanbasis auf die zu beschichtende Oberfläche des Artikels wird ein sogenannter Beschichtungsfilm gebildet, der unmittelbar beim Aufbringen auf die Oberfläche noch schmelzflüssig ist. Der Begriff Beschichtungsfilm bezeichnet somit eine Schicht aus geschmolzenem TPU. Im weiteren Verlauf des Verfahrens wird der Beschichtungsfilm abgekühlt, wobei das thermoplastische Elastomer auf Polyurethanbasis erstarrt und eine feste Oberflächenschicht ausbildet. Die Abkühlung des Beschichtungsfilms kann durch das Aufbringen auf eine kältere Oberfläche des Artikels erfolgen. Desweiteren kann der Beschichtungsfilm nach Aufbringen auf die Oberfläche eines Artikels auch durch kältere Umgebungsluft abgekühlt werden oder mit einem Luftstrom gekühlt werden. Auch die Abkühlung durch Kühlflüssigkeiten oder anderweitige Kühlvorrichtungen ist denkbar. Vorzugsweise wird der beschichtete Artikel auf Raumtemperatur abgekühlt.

Der im vorliegenden Verfahren eingesetzte Kunststoff bzw. Beschichtungsstoff ist ein thermoplastisches Elastomer auf Polyurethanbasis.

Thermoplastische Elastomere (Kurzzeichen TPE) sind Kunststoffe, die sich bei Raumtemperatur vergleichbar den klassischen Elastomeren verhalten, sich jedoch unter Wärmezufuhr plastisch verformen lassen und somit ein thermoplastisches Verhalten zeigen.

Thermoplaste sind Kunststoffe, die sich in einem bestimmten Temperaturbereich (thermoplastisch) verformen lassen. Dieser Vorgang ist reversibel, das heißt er kann durch Abkühlung und Wiedererwärmung bis in den schmelzflüssigen Zustand beliebig oft wiederholt werden, solange nicht durch Überhitzung die sogenannte thermische Zersetzung des Materials einsetzt. Elastomere sind formfeste, aber elastisch verformbare Kunststoffe, deren Glasübergangspunkt sich unterhalb der Raumtemperatur befindet. Durch Druck oder Dehnung können Elastomere ihre Form kurzzeitig verändern, nach Beendigung von Druck oder Dehnung nimmt das Elastomer schnell wieder seine ursprüngliche Form an.

In der vorliegenden Erfindung bezeichnen die Begriffe "thermoplastisches Elastomer auf Polyurethanbasis" und "thermoplastisches Polyurethan-Elastomer", "thermoplastisches Polyurethan", "Elastomer" und die Abkürzung "TPU" den gleichen Gegenstand.

Verfahren zur Herstellung von thermoplastischen Elastomeren auf Polyurethanbasis sind allgemein bekannt. TPU können beispielsweise durch Umsetzung von (a) Isocyanaten mit (b) gegenüber Isocyanaten reaktiven Verbindungen, beispielsweise Polyolen, mit einem hohen Molekulargewicht (Mw), beispielsweise von 450 bis 10000 g/mol, und (c) Kettenverlängerungsmitteln mit einem Molekulargewicht von 50 bis 449, beispielsweise einem niedermolekularen Polyol oder Polyamin, gegebenenfalls in Gegenwart von (d) Katalysatoren und/oder (e) üblichen Zusatzstoffen erhalten werden.

Basisinformationen über TPU, ihre Eigenschaften und Anwendungen sind z.B. im "Kunststoff-Handbuch", Band 7, Polyurethane, 3. Auflage, 1993, herausgegeben von G. Oertel, Carl Hanser Verlag, München (ISBN-10: 3446162631) angegeben. Weitere beispielhafte TPU sind offenbart in EP1511799 B2, WO2009010502 A1 und WO2007082838 A1, W02010018061A1, DE69112661T2 worauf hier ausdrücklich Bezug genommen wird.

In der vorliegenden Erfindung können prinzipiell alle TPU und Mischungen verschiedener TPU eingesetzt werden.

Die TPU können Zusatzstoffe, wie Additive, beispielsweise UV-Stabilisatoren, Füllstoffe, beispielsweise Glaspartikel, Glashohlkugeln oder Kreide, sowie Farben enthalten. Der Einsatz von Zusatzstoffen erfolgt unter der Maßgabe, dass dadurch die Haftung des TPU an der zu beschichtenden Oberfläche nicht negativ beeinträchtigt wird, was beispielsweise bei Wachsadditiven der Fall sein kann. In einer bevorzugten Ausführungsform enthält das verwendete TPU keine Zusatzstoffe.

Als besonders vorteilhaft haben sich in den Verfahren, Produkten und Verwendungen der vorliegenden Erfindung thermoplastische Elastomere auf Polyurethanbasis erwiesen, die eine Shore Härte von 80A bis 75D, mehr bevorzugt von 85A bis 70D aufweisen. Die Shore Härten werden vorzugsweise nach DIN 53505:2000-08 oder ISO 868 bestimmt.

Das in der vorliegenden Erfindung verwendete TPU besitzt in einer bevorzugten Ausführungsform, gemessen bei der Verarbeitungstemperatur von 210-250°C (abhängig vom TPU) und einem Prüfgewicht von 5 kg, einen Schmelzflussindex von mindestens 20 g/10min, vorzugsweise mindestens 50 g/10min. Noch mehr bevorzugt liegt der Schmelzflussindex bei den vorangehend benannten Bedingungen in Bereich von 20 g/10min bis 100 g/10min, vorzugsweise 50 g/10min bis 100 g/10min. Die Messung des Schmelzflussindex kann nach der in den Beispielen angegebenen Methode ISO 1133 erfolgen, oder analog dazu, gemäß den obigen Angaben.

Beispiele für geeignete TPU Handelsprodukte sind Elastollan® der Firma BASF (Elastogran), Desmopan®, Texin® und Utechllan® der Firma Bayer, Irogran® und Krystalgran® der Firma Huntsman, Pearlthane® der Firma Danquinsa und TPU-Granulate der RTP Company.

Der im Verfahren eingesetzte Extruder ist nicht besonders beschränkt, so dass alle gängigen Extruder zur Kunststoffverarbeitung eingesetzt werden können. Ein Extruder besteht aus einem beheizten Gehäuse (Extruderzylinder) und einer, oder mehreren (gleichläufig oder gegenläufig), rotierenden Schnecken. Der Kunststoff wird über den Einzugsbereich der Schnecke durch den Extruder in Richtung Austrittsdüse (Düse) gefördert. Hierbei schmilzt der Kunststoff, wodurch die Masse abhängig von der Temperatur und dem jeweiligen Kunststoff ihre Konsistenz in eine hochviskose bis niedrigviskose Schmelze ändert. Im weiteren Verlauf wird diese Schmelze homogenisiert, je nach Extruder-Bauform durch besondere Konfiguration der Schnecke, oder durch Widerstandselemente im Gehäuse. Am Ende tritt die Schmelze (Extrudat) aus der Düse aus.

Die Verwendung eines Einschneckenextruders mit einer sogenannten "Universaischnecke" ist in der vorliegenden Erfindung möglich. Bei einer Universalschnecke ist das Drehmoment an die Viskosität der Schmelze angepasst, die Schneckendrehzahl sollte vorzugsweise eine Umfangsgeschwindigkeit von 0,3 m/s nicht überschreiten und das Kompressionsverhältnis vorzugsweise zwischen 1:2 und 1:3 liegen.

Die Dicke des TPU-Beschichtungsfilms kann durch verschiedene Parameter beeinflusst werden, wie z.B. die Viskosität der Schmelze, die Breite des Düsenspalts, die Menge der geförderten Schmelze und die Vorschubgeschwindigkeit des Artikels relativ zur Düse.

Die Viskosität der Schmelze wird durch die Temperatur im Extruder eingestellt. Das TPU wird im Extruder auf eine Temperatur von 190 - 250°C, bevorzugt 190 - 240°C, mehr bevorzugt 190 - 230°C, am meisten bevorzugt 190 - 220°C erhitzt und mit dieser Temperatur auf die Oberfläche eines Artikels aufgebracht. Ein weiterer, vorteilhafter Temperaturbereich ist 195 - 250°C, bevorzugt 195 - 240°C, mehr bevorzugt 195 - 230°C, am meisten bevorzugt 195 - 220°C. Noch ein weiterer vorteilhafter Temperaturbereich ist 200 - 250°C, bevorzugt 200 - 240°C, mehr bevorzugt 200 - 230°C, am meisten bevorzugt 200 - 220°C. Ebenfalls ein vorteilhafter Temperaturbereich ist 205 - 250°C, bevorzugt 205 - 240°C, mehr bevorzugt 205 - 230°C, am meisten bevorzugt 205 - 220°C. Schließlich ist ein vorteilhafter Temperaturbereich 210 - 250°C, bevorzugt 210 - 240°C, mehr bevorzugt 210 - 230°C, am meisten bevorzugt 210 - 220°C. Diese Temperaturbereiche sind höher als die Temperaturen bei denen TPU normalerweise durch Extrusion verarbeitet werden. Vorzugsweise liegt die Temperatur eines ausgewählten TPU in der vorliegenden Erfindung 10 - 30°C über der Temperatur, die für das ausgewählte TPU als Verarbeitungstemperatur zur Extrusion üblich oder empfohlen ist. Die übliche oder empfohlene Temperatur kann zum Beispiel aus den Angaben des Herstellers hervorgehen, oder es ist die dem Fachmann auf dem Gebiet der TPU-Verarbeitung geläufige Verarbeitungstemperatur.

Es hat sich gezeigt, dass bei den oben angegebenen Temperaturen im Direktextrusionsverfahren eine Schicht aus TPU in gleichmäßiger Qualität und mit sehr geringer Schichtdicke und guter Haftfestigkeit erhalten wird. Bei den niedrigeren Temperaturen, bei denen TPU normalerweise durch Extrusion verarbeitet wird, wird die Beschichtung dicker als erwünscht und/oder ungleichmäßig dick und die Haftfestigkeit der Beschichtung ist zudem unbefriedigend. Bei höheren als den erfindungsgemäßen Temperaturen zersetzen sich die TPU und auch sehr kurze Verweilzeiten im Extruder verhindern die Zersetzung nicht.

Die Temperatur kann über den Verlauf des Extruderzylinders, d.h. vom Ort der Zuführung des TPU in Richtung der Düse, variieren. Ein Extruder mit einem Zylinder, der mehrere getrennt beheizbare Abschnitte, nachfolgend auch als Zonen bezeichnet, aufweist, kann verwendet werden. Nicht alle Zonen müssen die gleiche Temperatur aufweisen, so dass über die Länge des Extruders in Richtung Düse ein Temperaturgradient vorliegen kann. In einer ersten Zone, die sich üblicherweise am Ort der Zuführung des TPU befindet oder kurz dahinter, und in gegebenenfalls vorhandenen weiteren Zonen kann eine geringere Temperatur anliegen als an der letzten Zone vor der Düse. Mindestens in der letzten Zone des Extruderzylinders vor der Düse wird das TPU auf 190 - 250°C oder auf eine Temperatur in den zuvor genannten vorteilhaften und bevorzugten Bereichen erhitzt, wodurch eine niedrige Viskosität, ausgedrückt durch den Schmelzflussindex, erreicht wird.

In einer besonderen Ausführungsform weist der Extruder drei getrennt beheizbare Abschnitte auf.

Bei mehreren, getrennt beheizbaren Abschnitten wird das TPU vorzugsweise nur im letzten Abschnitt vor der Düse, der sogenannten Endzone, auf 190 - 250°C oder auf eine Temperatur in den zuvor genannten vorteilhaften und bevorzugten Bereichen erhitzt, und in der oder den der Endzone vorangehenden Zone(n) wird das TPU auf eine Temperatur erhitzt, die geringer ist als die Temperatur in der Endzone. Vorangehende Zonen liegen in Förderrichtung des TPU betrachtet vor der Endzone. In der oder den vorangehenden Zone(n) schmilzt das TPU, aber es ist noch höher viskos als in der Endzone. Dadurch wird das TPU thermisch geschont und eine Zersetzung durch Einwirkung hoher Temperaturen minimiert. Vorteilhafterweise beträgt der Unterschied zwischen der höchsten und der niedrigsten Temperatur des TPU im Extruder 10 - 30°C. Somit ist die Temperatur in der oder den vorangehenden Zonen vorteilhafterweise 10 - 30°C geringer als in der Endzone. In verschiedenen vorangehenden Zonen können unterschiedliche Temperaturen vorliegen, wobei die Temperatur in Förderrichtung des TPU vorzugsweise ansteigend ist.

Besonders bevorzugt werden in den der Endzone vorangehenden Zonen die Temperaturen auf die für das jeweilige TPU übliche oder empfohlene Verarbeitungstemperaturen zur Extrusion eingestellt und in der Endzone wird die Temperatur des TPU 10 - 30°C höher eingestellt als die übliche oder empfohlene Verarbeitungstemperatur.

In einer speziellen Variante der beiden zuvor beschriebenen Ausführungsformen beträgt das Volumen des letzten Abschnitts vor der Düse, der Endzone, 8 - 20 %, mehr bevorzugt 8 - 15% und am meisten bevorzugt 8-12% des gesamten beheizbaren Volumens des Extruderzylinders. Das gesamte beheizbare Volumen ist die Summe des Volumens aller beheizbaren Abschnitte des Extruderzylinders.

Mit dem Volumen des Extruderzylinders ist das Volumen des Raumes zwischen der Extruderschnecke und der Zylinderwand gemeint. Der Durchmesser des Extruderzylinders und der Schnecke können sich über den Längenverlauf des Zylinders, und somit von Abschnitt zu Abschnitt ändern.

Die durchschnittliche Verweilzeit des TPU im Extruder beträgt vorzugsweise maximal 15 Minuten, mehr bevorzugt maximal 10 Minuten, noch mehr bevorzugt maximal 5 Minuten. Die durchschnittliche Verweilzeit wird errechnet, indem man das Volumen des gesamten beheizbaren Volumens des Extruderzylinders durch den durch den Extruder geleiteten Volumenstrom des TPU dividiert. Die Verweilzeit des TPU in der Endzone beträgt vorzugsweise 8-20%, mehr bevorzugt 8-15% und am meisten bevorzugt 8-12% der oben genannten durchschnittlichen Verweilzeiten.

Die Breite des Düsenspalts, die Menge der geförderten Schmelze und die Vorschubgeschwindigkeit des Artikels relativ zur Düse hängen vom Maßstab der Gerätschaften und des zu beschichtenden Artikels ab und sind daher nicht verallgemeinerbar. Beispielhaft genannt sind hier Werte für einen Verfahrensaufbau im Labormaßstab: Im verwendeten Laborextruder werden bei einer Schneckenumdrehung ca. 0,2 cm³ Schmelze gefördert, entsprechend 2 cm³ pro Minute bei 10 U/min. Bei Drehzahlen der Schnecke zwischen 5 und 40 U/min werden zwischen 1 und 8 cm³ Schmelze gefördert. Der Vorschub eines zu beschichtenden Artikels liegt im Labormaßstab zwischen 0,3 und 3 m/min. Ein Beispiel ist weiter hinten angegeben.

Die Schichtdicke der erhaltenen Oberflächenschicht beträgt vorzugsweise 15 bis 150 Mikrometer, mehr bevorzugt 15 - 120 Mikrometer, noch mehr bevorzugt 15 - 100 Mikrometer, insbesondere bevorzugt 15 - 80 Mikrometer, 15 - 60 Mikrometer oder 15 - 40 Mikrometer und am meisten bevorzugt 15 - 35 Mikrometer. Die Schichtdicke kann nach den in den Beispielen angegebenen Verfahren bestimmt werden. Andere Verfahren zur Schichtdickenbestimmung sind ebenfalls anwendbar, wie z.B. eine Schichtdickenmessung an einer senkrecht zur Schicht geschnittenen Probe mittels (Elektronen)Mikroskopie.

In einer besonders vorteilhaften Ausführungsform betrifft die Erfindung ein Verfahren zur Beschichtung der Oberfläche eines Artikels mit einem thermoplastischen Elastomer auf Polyurethanbasis durch Direktextrusion, bei dem
- ein Artikel an der Düse eines Extruders vorbeigeführt wird,
- aus der Düse des Extruders ein im Extruder auf eine Temperatur von 190°C bis 250°C erhitztes geschmolzenes thermoplastisches Elastomer auf Polyurethanbasis auf die Oberfläche des Artikels aufgebracht wird, wobei auf der Oberfläche ein Beschichtungsfilm aus thermoplastischem Elastomer auf Polyurethanbasis gebildet wird,
- der Artikel über eine Zeitdauer von 1 bis 30 Minuten auf eine Temperatur von 140 - 200°C erhitzt wird, und
- das aufgebrachte Elastomer falls erforderlich abgekühlt wird, um eine feste Oberflächenschicht aus dem Elastomer zu bilden.

In dieser Ausführungsform des Direktextrusionsverfahrens wird der Artikel nach Aufbringen des thermoplastischen Elastomers auf Polyurethanbasis auf die Oberfläche über eine Zeitdauer von 1 bis 30 Minuten, vorzugsweise 5 bis 20 Minuten, auf eine Temperatur von 140 - 200°C erhitzt. D.h. der Artikel wird samt TPU-Schicht erhitzt. Dabei kann die TPU-Schicht je nach gewählter Temperatur noch in geschmolzener Form vorliegen, wie unmittelbar beim Aufbringen auf die Oberfläche. Bei Wahl einer geringeren Temperatur, beispielsweise im Bereich von 140°C, liegt das TPU nicht mehr in geschmolzener, also in fester Form vor, wobei das TPU gegenüber seinem Zustand bei Raumtemperatur erweicht ist.

Wenn die TPU-Schicht während des Erhitzens in geschmolzener Form vorliegt, ist noch ein Abkühlungsschritt erforderlich, um eine feste Oberflächenschicht aus dem TPU zu bilden. Ein solcher Abkühlungsschritt ist nicht zwingend erforderlich, wenn die TPU-Schicht trotz Erhitzens des Artikels bereits in fester Form vorliegt. Eine weitere Abkühlung auf Raumtemperatur kann dann erfolgen.

Gegenüber dem zuerst beschriebenen Direktextrusionsverfahren weist diese Ausführungsform einen thermischen Nachbehandlungsschritt des bereits mit einer TPU-Schicht versehenen Artikels bei 140 - 200°C auf. Ein solcher thermischer Nachbehandlungsschritt nach Aufbringen der Beschichtung hat sich als sehr vorteilhaft erwiesen, weil dadurch die Haftfestigkeit der TPU-Schicht auf der Oberfläche des Artikels verbessert werden kann. Es werden nach diesem Verfahren TPU-Beschichtungen mit einer besonders hohen Haftfestigkeit erhalten. Unter 140°C wird keine nennenswerte Verbesserung der Haftung erreicht. Temperaturen über 200°C erbringen keine weitere Haftungsverbesserung bei den eingesetzten TPU. Die thermische Nachbehandlung funktioniert besonders gut bei vergilbungsbeständigen TPU-Materialien.

Je geringer die Nachbehandlungstemperatur im Bereich von 140 - 200°C gewählt wird, desto länger wird vorzugsweise die Zeitdauer der Nachbehandlung im Bereich von 1 bis 30 Minuten gewählt. Dadurch wird eine ausreichende Erwärmung der Grenzfläche zwischen Substrat (Artikel) und Beschichtung sichergestellt. Bei höheren Temperaturen erfolgt die Nachbehandlung vorzugsweise schneller, da sonst die Beschichtung durch die hohen Temperaturen an Luft geschädigt werden kann.

Der Beschichtungsfilm oder die feste Oberflächenschicht kann in einer weiteren Ausführungsform des Direktextrusionsverfahrens mit einer Anpressvorrichtung, z.B. einer Walze, die Teil der Vorschubeinrichtung sein kann, an die Oberfläche des Artikels angepresst werden. Dadurch kann die Haftfestigkeit der TPU-Schicht auf der Oberfläche erhöht werden.

In einer weiteren Variante des Direktextrusionsverfahrens wird der Artikel vor Aufbringen des thermoplastischen Elastomers auf Polyurethanbasis auf eine Temperatur von 60°C bis 200°C erhitzt. Ein solches Vorerhitzen des Artikels hat den Vorteil, dass der unmittelbar beim Aufbringen auf die Oberfläche noch schmelzflüssige Beschichtungsfilm aus TPU auf der Oberfläche des Artikels langsamer abkühlen kann. Dadurch wird die Haftfestigkeit verbessert.

Es ist ferner von Vorteil, wenn die zu beschichtende Oberfläche des Artikels vor Aufbringen des TPU gereinigt wird, beispielsweise mit Isopropanol, Aceton oder durch Beizen. Holzoberflächen werden vorzugsweise vor der Beschichtung getrocknet.

In einer speziellen Ausführungsform des Direktextrusionsverfahrens wird die Beschichtung auf eine ausgehärtete oder unvollständig ausgehärtete Lackschicht aufgebracht, wobei die Lackschicht vor der Beschichtung mit TPU auf die zu beschichtende Oberfläche des Artikels aufgebracht wurde. Diese Lackschicht wird auch als Basislack bezeichnet. Im Fall einer unvollständig gehärteten Lackschicht erfolgt eine gemeinsame Aushärtung nach Beschichtung mit TPU. Beispiele für geeignete Lacke sind auf verschiedenen Bindemitteln basierende lösemittelhaltige oder wasserbasierende. Besonders bevorzugt sind Pulverlacke, wie Epoxi-, Polyester-, Hybrid-, Polyurethan- und Acrylatpulverlacke, die thermoplastisch oder duroplastisch sein können. Am meisten bevorzugt sind Pulverlacke, die auf Polyester basieren und vorzugsweise keine die Haftfestigkeit beeinflussenden Additive enthalten.

Es hat sich herausgestellt, dass eine besonders gute Haftfestigkeit von TPU auf Oberflächen aus Metall, insbesondere aus Aluminium oder einer Aluminiumlegierung, beispielsweise einer Aluminiumlegierung, der Magnesium zugesetzt ist, erzielt werden kann, wenn diese Oberflächen mit einem Pulverlack, wie oben beschrieben, vorbehandelt wurden.

In einer speziellen Ausführungsform wird die zu beschichtende Oberfläche mit Primern vorbehandelt, die die Haftfestigkeit einer TPU-Beschichtung verbessern. Geeignete Primersubstanzen sind ausgewählt aus Silanen, Polyisocyanaten, Epoxydharzen und silanmodifizierten Polymeren.

In einem weiteren Aspekt betrifft die vorliegende Erfindung einen Artikel, dessen Oberfläche teilweise oder vollständig mit einem thermoplastischen Elastomer auf Polyurethanbasis beschichtet ist. Die Schicht weist vorzugsweise eine Schichtdicke von 15 bis 150 Mikrometern auf, mehr bevorzugt 15 - 120 Mikrometer, noch mehr bevorzugt 15 - 100 Mikrometer, insbesondere bevorzugt 15 - 80 Mikrometer, 15 - 60 Mikrometer oder 15 - 40 Mikrometer und am meisten bevorzugt 15 - 35 Mikrometer.

Der Artikel kann teilweise beschichtet sein, so dass ein Teil seiner Oberfläche nicht mit TPU beschichtet ist. Es können aber auch eine sämtliche Oberflächen des Artikels beschichtet sein.

Der Artikel ist bevorzugt ausgewählt aus Blechen, Behältern, Leisten, Profilen, Verpackungen, Möbeln, technischen Geräten, Haushaltsgeräten, Unterhaltungselektronik, medizinischen Geräten, Laborgeräten.

Beispielhafte und besonders geeignete Oberflächenmaterialien des Artikels, die mit einer Beschichtung aus einem thermoplastischen Elastomer auf Polyurethanbasis versehen werden können, sind ausgewählt aus Kunststoffen, wie Polyolefinen, Polycarbonaten, Polyestern, Polyoxymethylen, Holz, Keramik, Glas, Metallen und Metalllegierungen, wie zum Beispiel Eisen, Stahl, Zink, Messing, Kupfer, Aluminium, Aluminiumlegierungen, insbesondere Legierungen umfassend Aluminium, Magnesium und/oder Silizium.

Für die Offenbarung des Artikels wird ausdrücklich auch auf die Offenbarung des zuvor beschriebenen Direktextrusionsverfahrens Bezug genommen, bei dem u.a. verschiedene TPU beschrieben wurden. Der erfindungsgemäße Artikel kann durch das zuvor beschriebene Direktextrusionsverfahren erhalten werden, ist aber nicht auf derart hergestellte Artikel beschränkt. Mögliche weitere Verfahren zum Aufbringen einer TPU-Schicht auf den Artikel sind die Laminierung mit TPU-Folie, ein Aufbringen einer TPU-Folie mit einer zusätzlichen Klebstoffschicht, beispielsweise Schmelzklebstoff, oder eine Bandbeschichtung.

Vorzugsweise befindet sich keine Klebstoffschicht zwischen dem Artikel bzw. der Oberfläche des Artikels und der auf den Artikel bzw. dessen Oberfläche aufgebrachte TPU-Schicht, insbesondere kein Haftkleber. Zuvor erwähnte (Basis)lacke und Primer zählen in diesem Sinne nicht zu Klebstoffen. In einer speziellen Ausführungsform befindet sich zwischen dem Artikel bzw. der Oberfläche des Artikels und der TPU-Schicht auch kein Primer oder Lack.

Vorzugsweise handelt es sich bei der Beschichtung des Artikels nicht um eine Beschichtung mit einem Wickelband, wie z.B. einem mit einer Klebstoffschicht versehenen Wickelband, das auf die Oberfläche des Artikels aufgeklebt wurde.

Bei dem erfindungsgemäßen Artikel befindet sich außenseitig von der TPU-Schicht keine weitere Schicht, insbesondere keine weitere Schicht aus anderem Kunststoff, wie z.B. Polyolefin.

In noch einem weiteren Aspekt betrifft die Erfindung die Verwendung einer Folie aus thermoplastischem Elastomer auf Polyurethanbasis mit einer Dicke von 15 bis 150 Mikrometern zur Beschichtung von Oberflächen. Die Folie ist vorzugsweise eine durch Extrusion hergestellte Folie.

Die Folie kann insbesondere zur Beschichtung von Oberflächen der zuvor genannten Artikel verwendet werden, also zur Herstellung von Oberflächenbeschichtungen aus TPU auf Artikeln, wobei die Artikel vorzugsweise ausgewählt sind aus Blechen, Behältern, Leisten, Profilen, Möbeln, Verpackungen, technischen Geräten, Haushaltsgeräten, Unterhaltungselektronik, medizinischen Geräten, Laborgeräten.

Die Beschichtung von Artikeln mit der TPU-Folie kann durch alle bekannten Verfahren erfolgen, insbesondere Laminierung, Aufbringen mit einer zusätzlichen Klebstoffschicht, beispielsweise Schmelzklebstoff, oder Bandbeschichtung.

Vorzugsweise ist die Verwendung der Folie derart gedacht, dass sich keine Klebstoffschicht zwischen dem Artikel bzw. der Oberfläche des Artikels und der auf den Artikel bzw. dessen Oberfläche aufgebrachten TPU-Schicht befindet, insbesondere kein Haftkleber. Zuvor erwähnte (Basis)lacke und Primer zählen in diesem Sinne nicht zu Klebstoffen. In einer speziellen Ausführungsform befindet sich zwischen dem Artikel bzw. der Oberfläche des Artikels und der TPU-Schicht auch kein Primer oder Lack.

Vorzugsweise betrifft die Verwendung der Folie nicht die Verwendung in einem Wickelband, wie z.B. einem mit einer Klebstoffschicht versehenen Wickelband, das auf die Oberfläche eines Artikels aufgeklebt wird.

Die Verwendung der TPU-Folie ist so zu verstehen, dass sich nach der Beschichtung eines Artikels sich außenseitig von der TPU-Schicht keine weitere Schicht befindet, insbesondere keine weitere Schicht aus anderem Kunststoff, wie z.B. Polyolefin.

Folien aus TPU mit der beschriebenen Dicke können durch ein Extrusionsverfahren zur Herstellung einer Folie aus einem thermoplastischen Elastomer auf Polyurethanbasis erzeugt werden, wobei ein thermoplastisches Elastomer auf Polyurethanbasis im Extruder auf eine Temperatur von 160 bis 230°C erhitzt und durch eine Schlitzdüse zu einer Folie mit einer Dicke von 10 bis 150 Mikrometer extrudiert wird.

Im Extrusionsverfahren zur Folienherstellung wird üblicherweise eine Düse mit einem größeren Verhältnis von Schlitzlänge zu Schlitzbreite eingesetzt als in dem eingangs beschriebenen Direktextrusionsverfahren. Die Schlitzdüse ist daher vorzugsweise eine Breitschlitzdüse im Labormaßstab mit einem Länge-Breite-Verhältnis von 300:1 bis 1000:1.

Vorzugsweise wird bei einem solchen Verfahren das thermoplastische Elastomer auf Polyurethanbasis im Extruder für eine Zeitdauer von 1 bis 20 Minuten erhitzt.

Nachfolgend wir die Erfindung anhand von Beispielen und besonderen Ausführungsformen beschrieben.

### 1. Figurenbeschreibung:

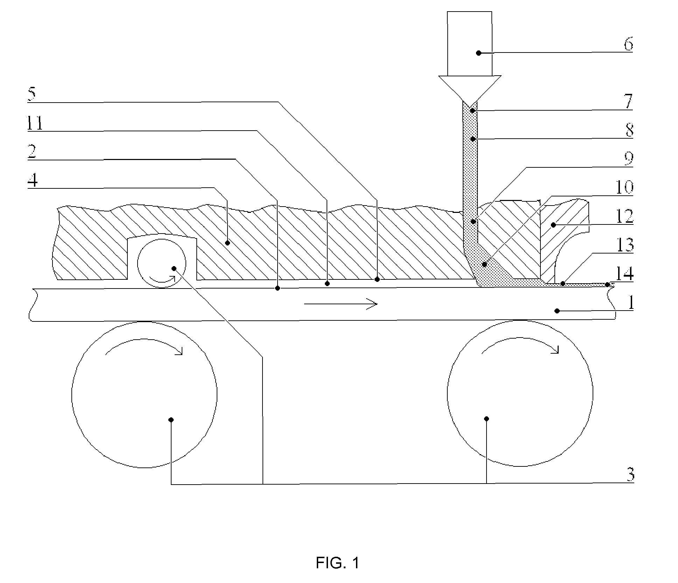

Die FIG. 1 zeigt in einer Querschnittsansicht eine Vorrichtung zur Beschichtung der Oberfläche eines Artikels mit einem thermoplastischen Elastomer auf Polyurethanbasis durch Direktextrusion und einen Artikel, der beschichtet wird.

### Verwendet wurde ein Extruder im Labormaßstab.

Das L/D-Verhältnis (Länge/Durchmesser) betrug ca. 20, der Durchmesser der Schnecke 14 mm und das Kompressionsverhältnis 1:3.
Im verwendeten Laborextruder wurden bei einer Schneckenumdrehung ca. 0,2 cm³ Schmelze gefördert, entsprechend 2 cm³ pro Minute bei 10 U/min. Bei Drehzahlen der Schnecke zwischen 5 und 40 U/min wurden zwischen 1 und 8 cm³ Schmelze gefördert. Der Vorschub einer zu beschichtenden Leiste lag zwischen 0,3 und 3 m/min, wobei die Leisten 3 cm breit waren. Mit diesem Aufbau konnten zwischen 90 bis 900 cm² Oberfläche pro Minute beschichtet werden.

Ein Artikel 1, hier in Form einer Platte oder eines Bleches, wird mit einer Vorschubeinrichtung, bestehend aus Transportwalzen 3 in Richtung des am Artikel 1 gezeichneten Pfeils bewegt. Die in Pfeilrichtung rotierenden Walzen 3 führen den Artikel 1 an der Düsenöffnung 10 der Schlitzdüse 9 vorbei, wobei die zu beschichtende Oberfläche 2 des Artikels 1 zur Düsenöffnung 10 hin orientiert ist. Vom Extruder 6 wird die TPU-Schmelze 7 durch den beheizten Düsenkanal 8 der Schlitzdüse 9 zur Düsenöffnung 10 geleitet. Der Düsenkanal 8 verläuft teilweise durch eine Werkzeugplatte 4, in Richtung der Oberfläche 5 der Werkzeugplatte 4. In die Oberfläche 5 der Werkzeugplatte 4 ist die Düsenöffnung 10 eingelassen. Der Düsenkanal 8 verbreitert sich vom Extruder 6 in Richtung der Oberfläche 5 der Werkzeugplatte 4. Durch die Düsenöffnung 10 wird die TPU-Schmelze 7 unmittelbar auf die Oberfläche 2 des vorbeilaufenden Artikels 1 aufgebracht. Zwischen der Oberfläche 5 der Werkzeugplatte 4 und der zu beschichtenden Oberfläche 2 des Artikels 1 ist ein Zwischenraum (oder Spalt) 11 gebildet. In dem Abschnitt des Zwischenraums 11, der in Bewegungsrichtung des Artikels 1 hinter der Düsenöffnung 10 liegt, dringt die TPU-Schmelze 7 ein und wird durch die vorbeiführende Bewegung des Artikels 1 auf der Oberfläche 2 verteilt. Im Anschluss an die Düsenöffnung 10 läuft der Artikel 1 an einem Staubalken 12 vorbei. Der Staubalken 12 verengt den Spalt 11, und ein dünner Beschichtungsfilm 13 wird gebildet. Außerdem wird durch den Staubalken 12 im Zwischenraum 11 die TPU-Schmelze 7 komprimiert und der Druck der Schmelze auf die zu beschichtende Oberfläche 2 erhöht. Beim Weitertransport verlässt die beschichtete Oberfläche 2 des Artikels 1 die Extrusionsvorrichtung, und in der kühleren Umgebungsluft erstarrt der noch schmelzflüssige Beschichtungsfilm 13 zu einer festen Oberflächenschicht 14. Der Artikel 1 kann alternativ auch durch aktiv betriebene Kühlvorrichtungen (nicht gezeigt) geleitet werden.

### 2. Charakterisierungsmethoden

Folgende Eigenschaften wurden charakterisiert:
- Shore-Härte nach DIN 53505
- Ritzhärte nach ISO 15184, Widerstand gegen Ritzen
- Erichsen-Tiefung DIN EN ISO 1520, Haftfestigkeit nach Eindrücken (Tiefungsprüfung)
- Abreißfestigkeit DIN EN ISO 4624
- Gitterschnitt DIN EN ISO 2409 (DIN 53151)
- Zugfestigkeit und Dehnung nach DIN 53504
- Lösemittelbeständigkeit
   o lastlose Lagerung beschichteter Proben in verschiedenen Testflüssigkeiten für eine bestimmte Zeit
   o Testmedien:
      ■ Natronlauge (w=10%, 7 Tage)
      ■ Salzsäure (w=10%, 180 Tage)
      ■ n-Butylacetat (24 Stunden)
      ■ Aceton (24 Stunden)
      ■ Ethanol (24 Stunden)
      ■ Benzin, bleifrei (30 Tage)
      ■ Maschinenöl (180 Tage)
- Abriebbeständigkeit mit Taber Abraser nach ISO 7784-1 bis 3
- Korrosionsbeständigkeit gegen Salzsprühnebel nach DIN EN ISO 9227 und Korrosionsschnelltest (hausinterner Test, der den Salzsprühtest in beschleunigter Form wiedergibt: "Korrosionsschnellprüfung für Pulverbeschichtungen"; *JOT 2*/*2002;* Dr. Thomas Herrmann, Dr. Herrmann GmbH & Co. Dresden; Prof. Dr. Hans-Jürgen Tiller, Marlies Günther, Innovent Technologieentwicklung Jena)
- Schmelzflussindex nach ISO 1133
- Bewitterung nach DIN EN ISO 11341 (Xenon) (DIN 53387)
- Vergilbung nach DIN 6167 und E 313-00
- Schichtdicke nach ISO 2360 (DIN 50984) für Nichteisenmetalle und ISO 2808 für alle Untergründe
- Glanz nach ISO 2813 (DIN 67530)

### 3. Beispiele

### 3.1 Beschichtungsversuche und Haftfestigkeit (Abreißfestigkeit)

Zur Beschichtung wurden zwei verschiedene thermoplastische Polyurethan-Elastomere verwendet. Das mit TPU 1 bezeichnete TPU ist Pearlthane D95N70D® der Firma Danquinsa. TPU 1 ist mit einer Härte von 70 Shore D deutlich härter als die meisten TPU. Die Verarbeitungstemperaturen bei der Standardextrusion liegen zwischen 160 und 195°C. Bei der Extrusionsbeschichtung gemäß der vorliegenden Erfindung wurden höhere Temperaturen zwischen 180 und 220°C und Temperaturen von über 210°C in der letzten Zone (Temperatur T3) verwendet. Das TPU 1 hat laut Herstellerangaben eine Zugfestigkeit von 32 MPa und eine Bruchdehnung von 300%.

Das mit TPU 2 bezeichnete TPU ist Desmopan DP 85085A® von Bayer. TPU 2 ist mit einer Härte von 85 Shore A deutlich weicher als TPU 1. Die Standardextrusionstemperaturen liegen bei 180 bis 210°C. In diesen Beispielen wurde bei der Beschichtung vor allem bei 200 bis 220°C gearbeitet. Laut Herstellerangaben hat dieses TPU eine Zugfestigkeit von 32 MPa und eine Bruchdehnung von 880%.

Beide TPU sind transparent und farblos. Es handelt sich bei beiden Materialien um aliphatische Verbindungen, welche sehr vergilbungsbeständig sind.

Verschiedene Substrate wurden nach dem beschriebenen Beschichtungsverfahren mit einem thermoplastischen Polyurethan-Elastomer beschichtet. Zugehörige Parameter wie Prozesstemperaturen und Substratgeschwindigkeiten sowie die erreichten Schichtdicken sind in Tabelle 1 aufgeführt.

**Tabelle 1 Beschichtungsbeispiele**

| **Bsp.** | **Substratmaterial** | **Vorbehandlung** | **TPU** | **T1** **[°C]** | **T2** **[°C]** | **T3** **[°C]** | **SA** **[rpm]** | **SV** **[rpm]** | **Dicke** **TPU [µm]** | **Nachbehandlung** | **Abreißfestigkeit** **[MPa]** |
|---|---|---|---|---|---|---|---|---|---|---|---|
| 1 | AlMg3 | auf 60°C vorgeheizt | 1 | 180 | 180 | 180 | 30 | 40 | 188 | keine | keine Haftung |
| 2 | AlMg3 | keine | 2 | 210 | 210 | 210 | 10 | 20 | 96 | keine | 0,2 |
| 3 | AlMg3 | keine | 1 | 200 | 200 | 215 | 40 | 30 | 200 | 15 min bei 180°C | 5,1 |
| 4 | AlMg3 | auf 80°C vorgeheizt | 2 | 210 | 210 | 210 | 10 | 40 | 52 | 15 min bei 180°C | 7,0 |
| 5 | AlMg3 | mit Pulverlack 1 beschichtet, auf 60°C vorgeheizt | 1 | 180 | 205 | 220 | 30 | 80 | 78 | 15 min bei 180°C | 6,4 |
| 6 | AlMgSi0,5 | mit Pulverlack 2 beschichtet, auf 60°C vorgeheizt | 2 | 190 | 210 | 210 | 10 | 40 | 40 | 15 min bei 180°C | 11,2 |
| 7 | AlMg3 | mit Pulverlack 3 beschichtet, auf 60°C vorgeheizt | 1 | 190 | 210 | 210 | 10 | 40 | 49 | 15 min bei 180°C | 9,1 |
| 8 | Stahl (St37) | mit 4%iger Salzsäure gereinigt, auf 80°C vorgeheizt | 2 | 210 | 210 | 210 | 10 | 40 | 46 | 15 min bei 180°C | 7,1 |
| 9 | Stahl (St37) | mit 8%iger Phosphorsäure gereinigt, auf 120°C vorgeheizt | 1 | 180 | 205 | 220 | 30 | 60 | 115 | 15 min bei 180°C | 11,1 |
| 10 | Holz (Birke) | getrocknet | 1 | 180 | 205 | 210 | 30 | 60 | 104 | keine | 1,6 |
| 11 | Holz (Birke) | getrocknet | 1 | 180 | 205 | 210 | 30 | 50 | 150 | 15 min bei 180°C | 2,9 |
| 12 | Holz (Buche) | getrocknet | 2 | 210 | 210 | 210 | 20 | 50 | 75 | 15 min bei 180°C | 4,2 |

| | | | | | | | | | | | |
|---|---|---|---|---|---|---|---|---|---|---|---|
| T1 bis T3... Temperaturen der Zonen im Extrudierprozess SA... Schneckenantrieb (10 rpm entsprechen ca. 2 g/min bzw. 2 cm³/min) SV... Substratvorschub (Vorschubeinheit zum Fördern des Substrats; 10 rpm entsprechen ca. 90 cm²/min vorbeilaufender Beschichtungsfläche) Pulverlack 1... Pulverlack von *Ganzlin* (Typ AR-0360-GL445) Pulverlack 3... Pulverlack von *Grimm Pulverlack* (Typ P2-858-G907-002) | | | | | | | | | | | |

### Bewertung:

Einerseits sind die Haftfestigkeiten der einzelnen Beschichtungsmaterialien auf gleichem Substrat sehr unterschiedlich. Das liegt zum einen am Erstarrungsverhalten bei der Abkühlung auf dem Substrat und zum anderen an der allgemeinen Adhäsion zum Substrat. Das erfordert eine vom TPU abhängige Vorgehensweise bei der Vorbehandlung, Beschichtung und Nachbehandlung.

Andererseits variieren auch die Haftfestigkeiten eines Beschichtungsmaterials auf den verschiedenen Substraten. Für die metallischen Substrate galt, dass ohne eine Nachbehandlung eine schlechtere Haftung erreicht wurde als mit Nachbehandlung. Ohne Nachbehandlung lagen die Abreißfestigkeiten weit unter 0,5 MPa (Bsp. 2). Mit einer entsprechenden Nachbehandlung erreichten Beschichtungen auf Stahl im Mittel 6 MPa (Bsp. 8), z.T. über 11 MPa (Bsp. 9), auf Aluminiumlegierungen dagegen im Durchschnitt um die 3 MPa (Bsp. 3 u. 4).

Sehr gute Abreißwerte bis zu 11 MPa konnten mit Pulverlack als Grundierung erreicht werden (Bsp. 5, 6 u. 7). Diese sollten keine Additive enthalten, die eine Haftung der Beschichtung auf dem Pulverlack verhindern.

Bei Holzsubstraten waren die Werte unabhängig von der Behandlung niedriger. Es wurden Werte um 2 MPa gemessen (Bsp. 10, 11 u. 12), allerdings sind diese geringeren Abreißwerte bei erfolgter Nachbehandlung meist auf ein Materialversagen des Holzes (Kohäsionsbruch) und nicht auf ein Versagen der Adhäsion der Beschichtung auf dem Holz zurückzuführen.

Bei allen Substraten, die bei der Beschichtung vorgeheizt waren, konnte eine leichte Verbesserung der Haftfestigkeit festgestellt werden.

Bei Schmelzetemperaturen, die im Bereich der Verarbeitungstemperaturen zur Standardextrusion lagen, hafteten die Beschichtungen nicht oder nur sehr schlecht auf der Substratoberfläche (Bsp. 1). Eine deutliche Erhöhung der Haftung brachte eine erfindungsgemäße hohe Schmelzetemperatur (Bsp. 2 bis 12). Durch die damit verbundene niedrige Viskosität verteilte sich die Schmelze besser auf der Substratoberfläche. Der Schmelzetemperatur ist aber durch die thermische Zersetzung der Kunststoffe eine Grenze nach oben gesetzt. Hier musste ein Gleichgewicht zwischen möglichst niedriger Viskosität und möglichst geringer Materialschädigung gefunden werden. Eine Möglichkeit bot die Steuerung des Temperaturprofils. Insbesondere wird das TPU erst kurz vor Austritt aus der Düse auf sehr hohe Schmelzetemperaturen hochgeheizt. Dabei muss vor diesem Hochheizen eine ausreichende Plastifizierung garantiert sein, um ein gleichmäßiges Beschichtungsbild zu erhalten.

### 3.2 Ritzhärte

Je dünner die Schichten werden, umso empfindlicher sind diese auf Kratzer, wobei TPU 1 einen höheren Ritzwiderstand hat als TPU 2. Auch gegen Durchritzen ist TPU 1 resistenter. Eine 100µm dicke Schicht aus TPU 1 wurde bei einer Last von 1500 g im Durchschnitt 80 mal geritzt, bis diese durchgeritzt war, eine Schicht aus TPU 2 bei gleicher Dicke dagegen nur 40 mal.

### 3.3 Lösemittelbeständigkeit

Die Lösemittelbeständigkeiten der beiden TPU sind vergleichbar. Sowohl in schwacher Natronlauge und schwacher Salzsäure, als auch in Maschinenöl konnten keine Veränderungen festgestellt werden. In n-Butylacetat, Aceton und Ethanol war jeweils eine leichte Quellung festzustellen, die aber reversibel war. In bleifreiem Benzin vergilbten alle Proben.

Allgemein war festzustellen, dass härtere TPU etwas weniger quellen als weichere.

### 3.4 Abriebbeständigkeit

Bei den Untersuchungen zur Abriebfestigkeit schnitt TPU 2 besser ab als TPU 1. Der Masseverlust lag nach 25 Umdrehungen unter 500g-Reibrollen bei 3 mg (TPU 2) und bei 11 mg (TPU 1). Zum Vergleich haben wir den Abriebverlust von guten PUR-Lacken gemessen, der bei 25 mg lag.

### 3.5 Korrosionsbeständigkeit (Salzsprühtest, Korrosionsschnelltest)

Beschichtete Aluminiumproben haben, sofern die Abreißfestigkeiten nur knapp über 2 MPa lagen, den Salzsprühtest bestanden. Bei Stahl wurden mit TPU zwar sehr gute Haftfestigkeiten mit bis zu 11 MPa Abreißfestigkeit erreicht, jedoch ist der Beschichtung keine Korrosionsschutzbehandlung vorangegangen. Das hat sich negativ auf die Beständigkeit im Salzsprühtest ausgewirkt. Für Stahl sollte eine individuelle Anpassung der Vorbehandlung an das Beschichtungsverfahren erfolgen.

Der Korrosionsschnelltest zeigte ähnliche Ergebnisse. Beschichtete Stahlproben ohne vorangegangene Korrosionsschutzbehandlung bestanden auch diesen Test nicht. Eine Ursache für das ungenügende Korrosionsverhalten könnte darin liegen, dass die Beschichtung keine ausreichende Diffusionssperre für alle Korrosionsstimulatoren aufweist.

Beschichtete Aluminiumproben bestanden den Korrosionsschnelltest ab einer Abreißfestigkeit von 4 MPa, mit Pulverlack vorbeschichtete schon ab 2,5 MPa.

### 3.6 Bewitterung und Vergilbung

Zur Untersuchung des Bewitterungsverhaltens wurden verschiedene TPU-Beschichtungen mittels Xenontest untersucht. Einige TPU haben den Test bestanden. Neben der Glanzerhaltung erwiesen sie sich auch vergilbungsbeständig.

### 3.7 Zugfestigkeit und Dehnung

Um nachzuweisen, dass die erfindungsgemäße Beschichtung flexibel genug ist, Verformungen ohne Schädigung zu überstehen, wurden die Dehnung und Zugfestigkeit extrudierter, dünner TPU-Folien ermittelt. Bei 100 µm dicken TPU 1-Folien wurden eine mittlere Dehnung von 180% und eine Zugfestigkeit von 20 MPa gemessen. Folien aus TPU 2 erreichten durchschnittlich 460% Dehnung und 14 MPa Zugfestigkeit.

Die Beschichtung kann somit in Bezug auf die Flexibilität eine Verformung des Artikels ohne Beschädigung überstehen, jedoch geben diese Werte allein keine vollständige Aussage über die Haftung bei Verformung aus.

## Patentansprüche

1. Verfahren zur Beschichtung der Oberfläche (2) eines Artikels (1) mit einem thermoplastischen Elastomer auf Polyurethanbasis durch Direktextrusion, bei dem
• ein Artikel (1) an der Düse (9) eines Extruders (6) vorbeigeführt wird,
• aus der Düse (9) des Extruders (6) ein im Extruder auf eine Temperatur von 190°C bis 250°C erhitztes geschmolzenes thermoplastisches Elastomer auf Polyurethanbasis (7) auf die Oberfläche (2) des Artikels (1) aufgebracht wird, wobei auf der Oberfläche ein Beschichtungsfilm (13) aus thermoplastischem Elastomer auf Polyurethanbasis gebildet wird, und
• der Beschichtungsfilm abgekühlt wird, wobei eine feste Oberflächenschicht (14) aus dem Elastomer gebildet wird.

2. Verfahren nach Anspruch 1, bei dem die Oberflächenschicht eine Schichtdicke von 15 bis 150 Mikrometer aufweist.

3. Verfahren nach Anspruch 1 oder 2, bei dem der Artikel nach Aufbringen des thermoplastischen Elastomers auf Polyurethanbasis auf die Oberfläche über eine Zeitdauer von 1 bis 30 Minuten auf eine Temperatur von 140 - 200°C erhitzt wird, und falls erforderlich abgekühlt wird, um eine feste Oberflächenschicht aus dem Elastomer zu bilden.

4. Verfahren nach einem der vorangehenden Ansprüche, bei dem der Extruder einen Extruderzylinder mit mehreren, getrennt beheizbaren Abschnitten aufweist, wobei das TPU in dem letzten Abschnitt vor der Düse auf 190-250°C erhitzt wird und in den vorangehenden Abschnitten auf eine geringere Temperatur erhitzt wird.

5. Verfahren nach Anspruch 4, wobei das Volumen des letzten Abschnitts vor der Düse 8 - 20% des gesamten beheizbaren Volumens des Extruderzylinders beträgt.

6. Verfahren nach einem der vorangehenden Ansprüche, bei dem die durchschnittliche Verweilzeit des thermoplastischen Elastomers auf Polyurethanbasis im Extruder maximal 15 Minuten beträgt.

7. Verfahren nach einem der vorangehenden Ansprüche, bei dem der Artikel vor Aufbringen des thermoplastischen Elastomers auf Polyurethanbasis auf eine Temperatur von 60 bis 200°C erhitzt wird.

8. Verfahren nach einem der vorangehenden Ansprüche, bei dem vor dem Aufbringen des thermoplastischen Elastomers auf Polyurethanbasis eine Lackschicht auf die zu beschichtende Oberfläche des Artikels aufgebracht wird.

9. Verfahren nach Anspruch 8, bei dem die Lackschicht eine Schicht aus Pulverlack ist.

10. Artikel (1), dessen Oberfläche (2) teilweise oder vollständig mit einem thermoplastischen Elastomer auf Polyurethanbasis (7) beschichtet ist, **dadurch gekennzeichnet, dass** die Schicht eine Schichtdicke von 15 bis 150 Mikrometer aufweist.

11. Artikel nach Anspruch 10, der ausgewählt ist aus Blechen, Behältern, Leisten, Profilen, Verpackungen, Möbeln, technischen Geräten, Haushaltsgeräten, Unterhaltungselektronikartikeln, medizinischen Geräten und Laborgeräten.

12. Artikel nach Anspruch 10 oder 11, der zwischen der Oberfläche (2) und der Schicht (14) aus thermoplastischem Elastomer auf Polyurethanbasis eine Lackschicht aufweist.

13. Artikel nach Anspruch 12, bei dem die Lackschicht eine Schicht aus Pulverlack ist.

14. Verwendung einer Folie aus thermoplastischem Elastomer auf Polyurethanbasis mit einer Dicke von 15 bis 150 Mikrometer zur Beschichtung von Oberflächen.

15. Verwendung nach Anspruch 14, wobei die Oberfläche die Oberfläche eines Artikels ist, der ausgewählt ist aus Blechen, Behältern, Leisten, Profilen, Möbeln, Verpackungen, technischen Geräten, Haushaltsgeräten, Unterhaltungselektronik, medizinischen Geräten und Laborgeräten.
